# EUROPEAN PATENT APPLICATION

(11) **EP 4 767 825 A1**
(43) Date of publication of application: **01.07.2026**
(21) Application number: 24383465.2
(22) Date of filing: 26.12.2024
(51) Int. Cl.: A23B 7/16, A23P 20/10

(54) **WATER-BASED COMPOSITION COMPRISING METHYLCELLULOSE AND A NATURAL EXTRACT, FOR COATING FRUITS AND VEGETABLES TO EXTEND THEIR SHELF LIFE**

(71) Applicant: Fundación Tecnalia Research & Innovation, 20009 Donastia-San Sebastían Gipuzkoa (ES)
(72) Inventor: VILLARAN VELASCO, María del Carmen, 01510 Miñano Mayor, Álava (ES); DIAZ DE APODACA DIAZ, Elena, 01510 Miñano Mayor, Álava (ES); FERNÁNDEZ DE CASTRO, Laura, 01510 Miñano Mayor, Álava (ES)
(74) Representative: Balder IP Law, S.L.

(57) **Abstract**

The present invention relates to a water-based composition comprising methylcellulose and an antimicrobial natural extract, which is useful and suitable for coating fruits and vegetables having an edible casing, to extend their shelf life and extend the time until perishing. The coating obtained by applying the water-based composition to fruits or vegetables, is edible and does not negatively affect the appearance, flavour and smell of said fruits or vegetables. The invention also refers to a method for obtaining the water-based composition, and the use of the water-based composition for coating fruits and vegetables.

## Description

### TECHNICAL FIELD

The present invention relates to a water-based composition comprising methylcellulose and a natural extract, which is useful and suitable for coating fruits and vegetables having an edible casing, to extend their shelf life and extend the time until perishing. The coating obtained by applying the water-based composition to fruits or vegetables, is edible and does not negatively affect the appearance, flavour and smell of said fruits or vegetables. The invention also refers to a method for obtaining the water-based composition, and the use of the water-based composition for coating fruits and vegetables.

### STATE OF THE ART

Fruits and vegetables play an important role in healthy nutrition due to their vitamins, minerals, antioxidants, and fibers. However, these products are considerably perishable and could not be accepted for consumption if they are not managed properly after harvesting. Their major problem being their short shelf life and their rapid deterioration, causing the reduction in the edible quality and undesirable appearance of these products, resulting from biochemical changes, physiological aging, and microbial infections during storage and transportation thereof. The fruits and vegetables thus need to be protected from mechanical stress during transportation/distribution, and the action of oxygen, moisture, water vapor, light, dust, and microorganisms, both during transportation/distribution and storage/exhibition *[*Jafarzadeh et al. Application of bio-nanocomposite films and edible coatings for extending the shelf life of fresh fruits and vegetables. Adv Colloid Interface Sci. 2021 May;291:102405. PMID: 33819726].

All natural environments are inhabited by multiple microorganisms of different types and physiological activity. The production of fruits and vegetables, for example apples, involves a series of stages, such as harvesting, transport and storage, in which certain care must be taken to avoid losses of or damages to the product. Although in the harvesting stage there may be problems due to inadequate handling of the fruit or vegetable, most of the problems occur in the post-harvest stage. Humidity and temperature during transportation and storage are important factors that contribute to the appearance of diseases in the fruits and vegetables, thus facilitating the presence of pests and microorganisms.

Conventional methods for extending the life of fruits and vegetables are e.g. their refrigerated transportation and storage, irradiation, modified atmosphere packaging (MAP), or controlled atmosphere packaging (CAP) thereof. Also, the use of synthetic chemical compounds as benzoates (sodium benzoate), sorbates (potasium sorbate), sulfites (sulphur dioxide), antioxidants (Butylated hydroxyanisole (BHA) and butylated hydroxytoluene (BHT) ) or parabens (Methyl paraben) is known to extend the life of fruits and vegetables. Nevertheless, the preservation of fruit still has limitations and inconveniences.

Edible coatings are one of the solutions proposed to try to extend shelf life of fruits and vegetables, avoiding the use of potentially toxic synthetic chemical compounds.

Numerous coatings have been developed, such coatings ranging from coatings based on starch, alginate, waxes (such as candelilla and carnauba wax), collagen, galactomannans, or cellulose derivatives such as carboxymethyl cellulose or hydroxypropyl methylcellulose.

The coatings known up to date present diverse problems, such as their animal origin: collagen is primarily extracted from animal bones, fish bones, or animal skin, not being suitable for fruit and vegetables, which need to be animal free for vegetarian, vegan or kosher consumption. Further problems are the fragility of the coating or its unnatural appearance.

It is important that such coatings are sufficiently resistant, stable and flexible, but do not affect the appearance, smell or taste of the coated product.

For example, US20120263842 A1 discloses a water-based composition for coating foodstuffs, comprising alginate, starch and carboxymethyl cellulose. EP2893813 B discloses an aqueous solution comprising carboxymethyl cellulose in combination with sucrose esters of fatty acids and/or fructose esters of fatty acids.

There still remains the need for further improving the conservation of fruits and vegetables, in order to elongate their shelf life.

### DESCRIPTION OF THE INVENTION

Accordingly, the present invention provides a novel water-based composition, which is suitable for coating fruits and vegetables which have an edible casing, to a method for producing said composition and a method for coating fruits and vegetables which have an edible casing with said composition.

A first aspect of the present invention is a water-based composition comprising:
- 0.5 to 2 wt. % of methylcellulose;
- 0.001 to 1 wt. % of a natural extract with antimicrobial effect;
- optionally a plasticizer, in an amount between 0 and 35 % with respect to the amount of methylcellulose;
- water to balance;
the weight percentages being with respect to the total amount of water-based composition.

The water-based composition of the invention is suitable for coating fruits and vegetables having an edible casing, as the composition provides a protective coating, which is also edible without conferring any negative characteristics to the coated fruit or vegetable.

According to particular embodiments of the invention, the total amount of natural extract(s) in the composition is at least 0.005 wt. %, at least 0.0075 wt. %, at least 0.01 wt%, or at least 0.1 wt% and is of less than 1 wt%, less than 0.5 wt%, less than 0.25 wt% or less than 0.1 wt%. These minimum and maximum values are intended to be combined to provide ranges, e.g. between 0.005 wt % and wt%, or between 0.1 wt% and 0.25 wt%.

The natural extract having an antimicrobial effect may be any natural extract or oil which is known in the art to have some antimicrobial effect and is suitable for human consumption, i.e. is non-toxic if ingested; also mixtures may be used, the amount as defined above for the natural extract corresponding to the sum of natural extracts used in the composition.

The antimicrobial effect of the natural extract preferably is against one or more of *Lelliottia amnigena, Pseudomonas lutea, Curtobacterium flaccumfaciens, Peterozyma toletana, Bullera alba, Debaryomyces hansenii, Candida oregonensis, Penicillium rugulosum, Neocucurbitaria unguis-hominis* and *Penicillium expansum.*

The natural extract may be any plant or fruit extract, or essential oils originated from plants or fruits.

Numerous natural extracts are commercially available, and any extract known to exert some antimicrobial effect may be used in the composition of the invention. Great part of the antimicrobial activity of plant extracts is attributed to their content of terpenes and phenolic compounds (polyphenols), mainly flavonoids and their derivatives. This group of polyphenols may interact with lipid bilayers and perturb plasma membrane functionality. For example, the plant or fruit extract may be selected from the group comprising thyme or melissa extracts, or grape or orange extracts; and the essential oils may be selected from oregano or garlic essential oils. Thyme extract, for example, contains phenolic monoterpenes (thymol and carvacrol), and also phenolic compounds such as caffeic acid and p-cymano-2,3-diol. The major characteristic constituents of melissa extract are hydroxycinnamic acids (rosmarinic, p-coumaric, caffeic and chlorogenic acid). Grape extract: contains more than 95 % polyphenols, such as phenolic acids (gallic acid, p-coumaric and trans-ferulic acid, tartaric acid, protocatechuic acid, malic acid), and proanthocyanidins in the form of monomeric phenolic compounds ((+)-catechin and (-)-epicatechin, epicatechin-3-O-gallate, flavan-3-ols).

Also numerous essential oils are commercially available; essential oils are a complex mixture of volatile components with varying chemical compositions and types of essential oils, providing natural antibacterial, antifungal, and antioxidant benefits. Their natural antimicrobial properties make them effective against a wide range of pathogens, including bacteria, fungi and yeasts. For example, the main component of garlic essential oil is allicin (40% of garlic essential oil composition); it contains sulfur compounds as the main volatile phytochemicals, dominated by allyl polysulfides, such as diallyl disulfide, diallyl trisulfide, and diallyl disulfide. Oregano essential oil is rich in phenolic compounds, notably γ-terpinene, carvacrol, and thymol.

Nevertheless, the natural extract or oil is not limited to the above listed extracts or essential oils, and any extract or essential oil known to exert some antimicrobial effect may be used. Preferred are orange extract and garlic essential oil, or mixtures thereof. In particular, orange extract is commercially available, but may also be prepared, as shown in Example 3.

According to further particular embodiments, the content of methylcellulose in the composition of the invention is of at least 0.5 wt%, at least 0.75 wt%, at least 1 wt%, at least 1.25 wt%, at least 1.5 wt% or at least 1.75 wt%, and is less than 2 wt%, less than 1.75 wt%, less than 1.5 wt%, less than 1.25 wt%, less than 1 wt% or less than 0.75 wt%. These minimum and maximum values are intended to be combined to provide ranges, e.g. between 0.5 wt % and 1.5 wt%, between 0.75 and 1.25 wt% or between 1 wt% and 1.75 wt%.

In the composition of the invention, the plasticizer may be present or not, in an amount between 0 and 35 % with respect to the amount of natural extract. According to a particular embodiment, the plasticizer is present, the content thus being above 0 wt%, preferably at least 5 % with respect to the amount of methylcellulose. According to particular embodiments, the content of plasticizer is at least 5 %, at least 10 %, at least 15 %, at least 20 % or at least 25 % with respect to the amount of natural extract, and is less than 35 %, less than 30 %, less than 25 %, less than 20 %, less than 15 %, or less than 10 %, with respect to the amount of methylcellulose. These minimum and maximum values are intended to be combined to provide ranges, e.g. between 5 % and 25 %, between 15 and 30 % or between 20 % and 35 %, with respect to the amount of methylcellulose.

According to a particular embodiment, the plasticizer is or contains glycerol.

According to a further aspect of the invention, the composition of the invention as defined above may be prepared by a method comprising the following steps:
1. adding methylcellulose to water, in an amount corresponding the weight percentage intended in the final composition, or above;
2. heating the obtained mixture to a temperature of between 60 and 100 °C, and stirring the mixture;
3. removing the heating; if necessary, adding additional water; and stirring until a temperature of between 20 and 30 °C is reached;
4. optionally adding plasticizer, and stirring until a homogeneous mixture is obtained;
5. adding the natural extract or extracts to the mixture, and continue stirring until a homogenous mixture is formed, thus obtaining the water-based composition.

In step 2, according to particular embodiments, the mixture is heated to a temperature between 70 and 90 °C, preferably between 75 and 85 °C.

In step 3, it will be necessary to add additional water, if in step 1 more methylcellulose than that corresponding to the intended final weight percentage was added, in order to adjust the final concentrations. Regarding the final temperature between 20 and 30°C, the mixture should be allowed to cool down until reaching room temperature, which will be around 25°C.

Step 4 will only be performed if plasticizer is present in the composition of the invention.

A further aspect of the invention is a method for coating fruits and vegetables having an edible casing, comprising the steps of:
a. washing and drying the fruit or vegetable to be coated to remove any dirt or dust;
b. providing a water-based composition as defined above;
c. applying the water-based composition by a procedure selected from one of the following:
   - immersing the fruit or vegetable in the water-based composition and removing the fruit or vegetable from the water-based composition; or
   - placing the fruit or vegetable on a clean surface and spraying the water-based composition the fruit or vegetable, so as to coat the fruit or vegetable with the water-based composition; and
d. allowing the fruit or vegetable to dry, preferably in a climatic chamber, at a temperature of between 20 and 27 °C and a humidity of between 30 and 50 %.

According to a particular embodiment, the fruits and vegetables to be coated are selected from, but not limited to, apples, pears, grapes, cherries, peaches, nectarines, apricots, berries, tomatoes, peppers, cucumbers, aubergines, carrots, asparagus and zucchini. According to a preferred embodiment, the fruit to be coated is an apple.

### BRIEF DESCRIPTION OF THE FIGURES

To complete the description and in order to provide for a better understanding of the invention, a set of figures is provided. Said figures form an integral part of the description and illustrate embodiments of the invention, but should not be interpreted as restricting the scope of the invention, but just as examples of how the invention can be carried out.

The following figures are included:
Figure 1: photographs of three apples which were used for isolation of moulds, yeasts and bacteria.
Figure 2: photographs showing colonies on PCA and DRBC agar plates obtained from serial dilutions of the different apple samples.
Figure 3: photographs showing pure cultures isolated from the apple samples.
Figure 4: photographs of an apple immediately after immersion in a coating composition, and apples drying in a climatic chamber
Figure 6: graph showing the weight loss in gram of coated and uncoated apples, for comparison of the performance of different polysaccharides.

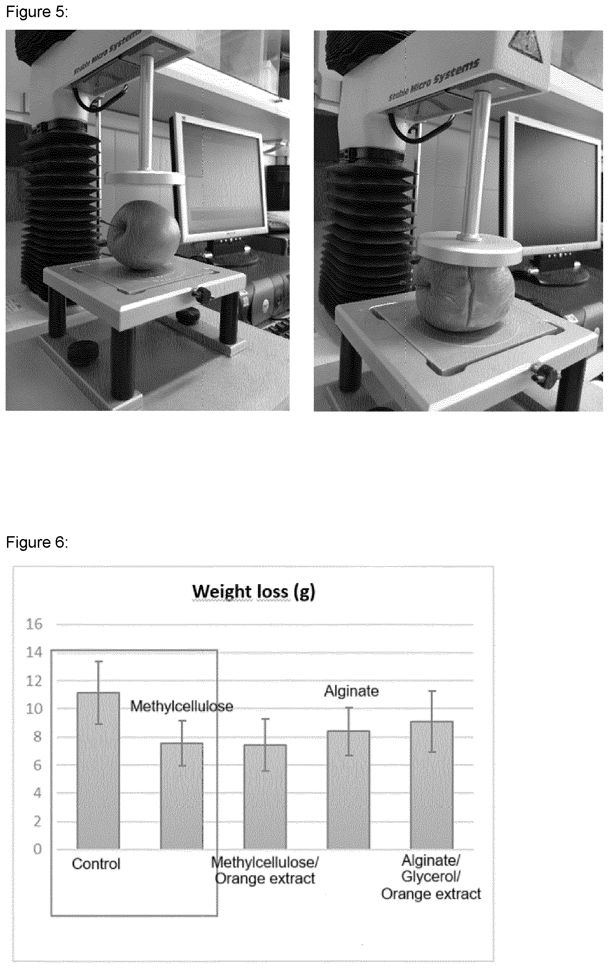

Figure 5: photographs showing a texture analyser (model TA.XT.Plus, Stable Micro Systems, UK), with an apple before applying force, and immediately after breaking.
Figure 6: weight loss of apples with and without coating, after 24 hours, 1, 2 and 3 weeks

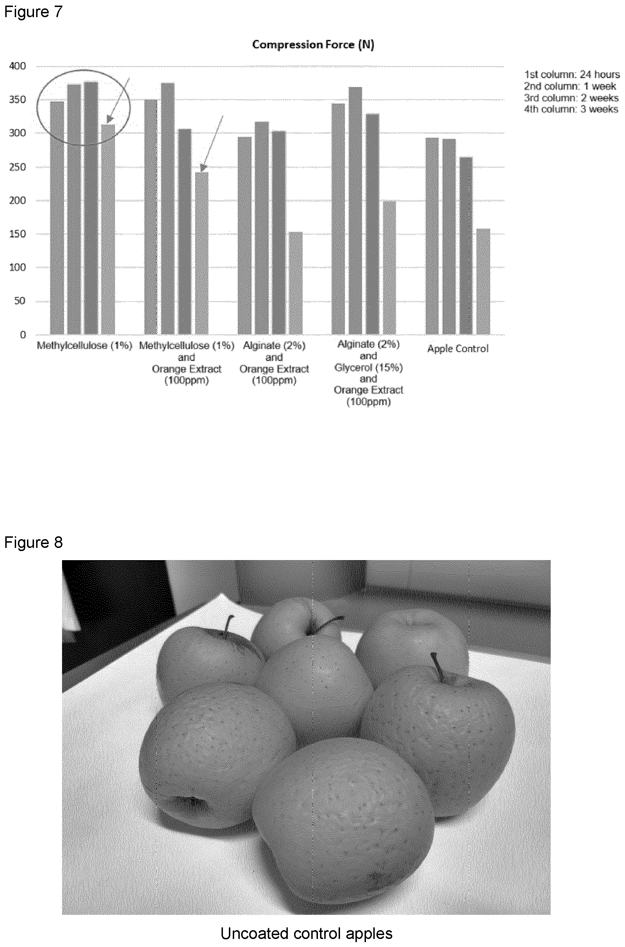

Figure 7: graph showing compression force necessary to break the different apples, with and without coating.
**Figures 8** to **12****:** photographs of uncoated apples and apples coated with different compositions, taken four weeks after coating
Figure 8: corresponds to uncoated control apples four weeks after coating.

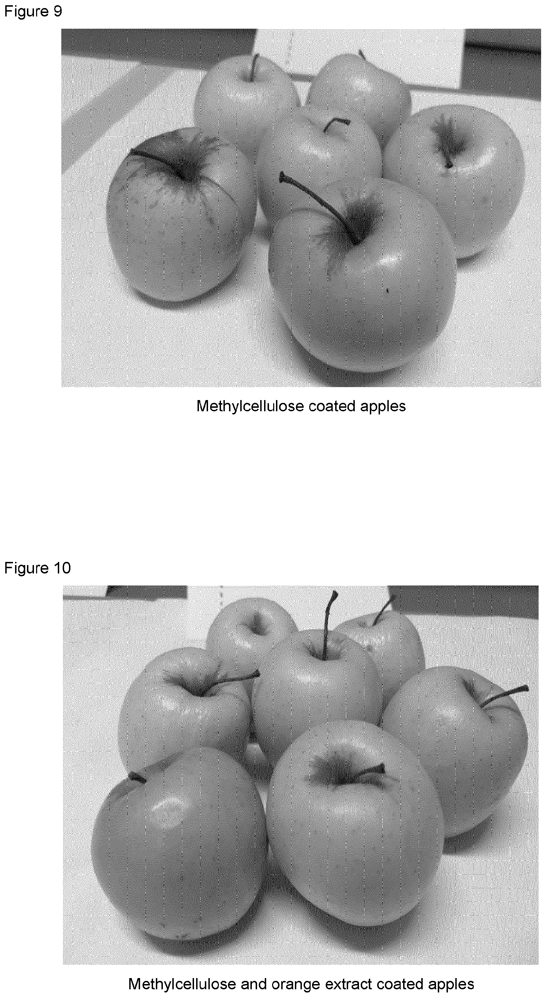

Figure 9: corresponds to apples coated with methylcellulose alone four weeks after coating.
Figure 10: corresponds to apples coated with methylcellulose containing orange extract four weeks after coating.

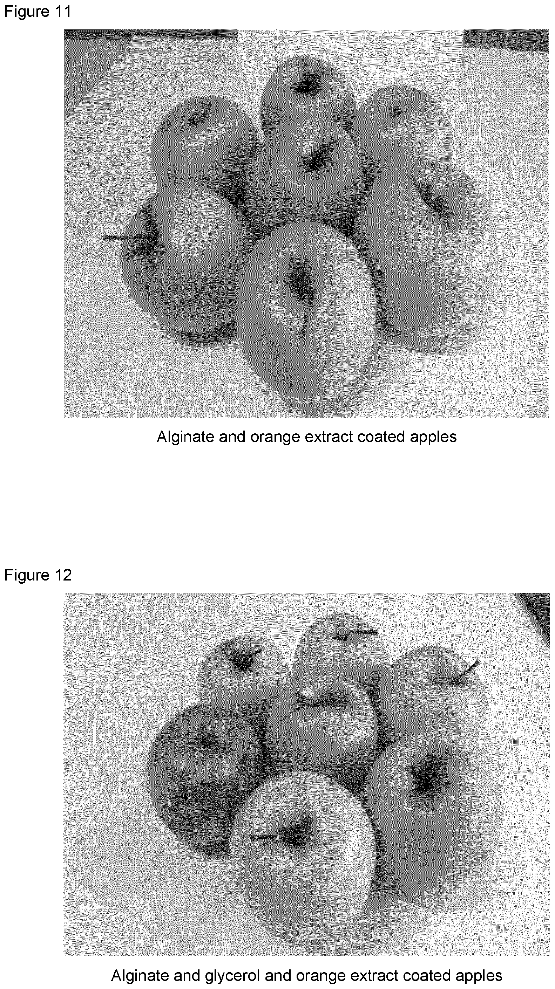

Figure 11: corresponds to apples coated with alginate containing orange extract.
Figure 12: corresponds to apples coated with alginate and glycerol and orange extract.

### EXAMPLES

In the following, the invention will be further illustrated by examples and experimental results. In no case should they be interpreted as limiting the scope of the invention, but merely as an illustration of the invention.

### EXAMPLE 1: Preparation of a water-based compositions comprising methylcellulose

Compositions comprising:
- methylcellulose;
- methylcellulose and glycerol; and
- methylcellulose, glycerol and orange extract (see Example 3 for an example of preparation thereof)
were prepared.

### Example 1.1: preparation of a composition comprising methylcellulose

1 g of methylcellulose (1g) was weighed and dissolved in 30 mL of water at 80°C under constant stirring for 30 min.

70 ml additional water were added, and the obtained mixture was stirred until reaching room temperature (25°C).

### Example 1.2: preparation of a composition comprising methylcellulose and glycerol

1 g of methylcellulose (1g) was weighed and dissolved in 30 mL of water at 80°C under constant stirring for 30 min.

70 ml additional water were added, and the obtained mixture was stirred until reaching room temperature (25°C).

0.25 g glycerol were added and the mixture was stirred during 5 min.

### Example 1.3: preparation of a composition comprising methylcellulose and orange extract (according to the invention)

1 g of methylcellulose (1g) was weighed and dissolved in 30 mL of water at 80°C under constant stirring for 30 min.

70 ml additional water were added, and the obtained mixture was stirred until reaching room temperature (25°C).

0.1 g of orange extract was added, and stirring was maintained during 5 min, until a homogeneous mixture was obtained.

### Example 1.4: preparation of a composition comprising methylcellulose, glycerol and orange extract (according to the invention)

1 g of methylcellulose (1g) was weighed and dissolved in 30 mL of water at 80°C under constant stirring for 30 min.

70 ml additional water were added, and the obtained mixture was stirred until reaching room temperature (25°C).

0.25 g glycerol were added and the mixture was stirred during 5 min.

0.1 g of orange extract was added, and stirring was maintained during 5 min, until a homogeneous mixture was obtained.

### EXAMPLE 2: Preparation of comparative compositions

Compositions comprising:
- LM Pectin;
- LM Pectin and glycerol;
- HM Pectin;
- HM Pectin and glycerol;
- Alginate;
- Alginate and glycerol;
- Alginate and orange extract; and
- Alginate and glycerol and orange extract;
were prepared.

### Example 2.1: Preparation of a composition comprising LM Pectin

2 g of LM pectin were weighed and dissolved in 100 mL of water under constant stirring for 30 min, until complete dissolution.

### Example 2.2: Preparation of a composition comprising LM Pectin and glycerol

2 g of LM pectin were weighed and dissolved in 100 mL of water under constant stirring for 30 min, until complete dissolution.

0.5 g glycerol were added and the mixture was stirred during 5 min.

### Example 2.3: Preparation of a composition comprising HM Pectin

2 g of HM pectin were weighed and dissolved in 100 mL of water under constant stirring for 30 min, until complete dissolution.

### Example 2.4: Preparation of a composition comprising HM Pectin and glycerol

2 g of HM pectin were weighed and dissolved in 100 mL of water under constant stirring for 30 min, until complete dissolution.

0.5 g glycerol were added and the mixture was stirred during 5 min.

### Example 2.5: Preparation of a composition comprising alginate

1.5 g of alginate were weighed and dissolved in 100 mL of water under constant stirring for 30 min, until complete dissolution.

### Example 2.6: Preparation of a composition comprising Alginate and glycerol

1.5 g of alginate were weighed and dissolved in 100 mL of water under constant stirring for 30 min, until complete dissolution.

0.375 g glycerol were added and the mixture was stirred during 5 min.

### Example 2.7: Preparation of a composition comprising alginate and orange extract

1.5 g of alginate were weighed and dissolved in 100 mL of water under constant stirring for 30 min, until complete dissolution.

0.1 g of orange extract were added, and stirring was maintained another 5 minutes until a homogeneous mixture was obtained.

### Example 2.8: Preparation of a composition comprising alginate and glycerol and orange extract

1.5 g of alginate were weighed and dissolved in 100 mL of water under constant stirring for 30 min, until complete dissolution.

0.375 g glycerol were added and the mixture was stirred during 5 min.

0.1 g of orange extract were added, and stirring was maintained another 5 minutes until a homogeneous mixture was obtained.

### EXAMPLE 3: Preparation of orange extract, having antimicrobial activity

The orange peel is crushed until it reaches a particle size of approximately 1 mm. It is then subjected to enzymatic treatment to eliminate the sugars present. The addition of pectinase-type enzymes facilitates extraction and reduces the viscosity of the resulting liquid fraction. Once this stage is completed, the suspension is pressed through a filter of approximately 500 microns and the liquid and solid fractions are separated, each following its own recovery route.

The solid fraction is dried under vacuum drying to prevent the product from burning and degrading the compounds to be recovered in the recovery process. A benchmark for this process is a final water content of less than 10% in order to have a useful life suitable for the subsequent management of the product. If the particle size after drying is larger than desired for the extraction of polyphenols, the dried product can be crushed.

After drying, the dried product is subjected to a first solid-liquid extraction cycle under the following conditions:
- Ethanol ratio
- Ratio solid/liquid: 1/6 weight/volume
- Temperature 90 °C
- Time: 30 minutes with stirring

The resulting product is decanted, and the liquid fraction is separated from the solid fraction. The solid fraction resulting from the extraction is subjected to a second extraction and decantation process under the same conditions as those indicated in the first extraction. The liquid fraction from this second extraction is mixed with that obtained in the first extraction. The resulting extract is filtered and a solution with a minimum of 1932 mg/l of polyphenols is obtained, which can then be concentrated.

### EXAMPLE 4: Isolation of micro-organisms

With the aim of determining which microorganisms influence post-harvest spoilage, the isolation and identification of the microorganisms present in apples, specifically provided for this determination, has been carried out. Isolation makes it possible to obtain pure organisms from the mixed population present in the apples. In this way, in subsequent tasks it will be possible to study the effect of coatings or antimicrobials on each of the specific, individual organisms (moulds, yeasts or bacteria) isolated from the apples.

The isolation of micro-organisms from apples was performed following the steps of:
1.- Obtaining the apple samples
2.- Selecting culture media
3.- Obtaining pure cultures
4.- Identification

The apples used were imported from Mexico and stored at the applicant' facilities, until the determination was started. The apples pertained to two different varieties one green and one red (no specific names were provided by the provider).

In view of the appearance of the apples, it was decided to use both green and red apples, which still looked good at the time of analysis, and to carry out a direct isolation of a large infected area of one of the green apples.

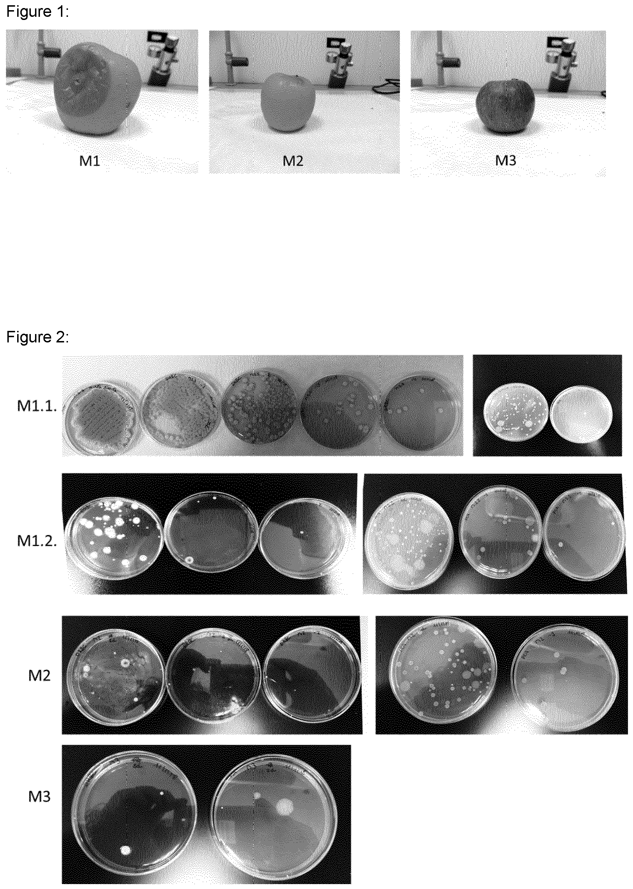

Three apples were used for isolation, a green and a red apple having a good appearance (hereinafter, apples M2 and M3, respectively), and a green apple with a large infected area (hereinafter, apple M1), which was directly isolated. See **Figure 1****.**

The isolation technique selected for this task was serial dilutions and plating with selective and differential culture media. The media were the following:
- Plate Count Agar (PCA) for the growth of Mesophilic Aerobes
- Dichloran Rose Bengal Chloramphenicol Agar (DRBC): Selective solid selective medium for the enumeration and isolation of moulds and yeasts
- MRS Agar for lactic acid bacteria enumeration
- Violet red Bile Dextrose Agar (VRBD Agar): Selective medium for enumeration of enterobacteria.

For obtaining pure cultures, the different samples from the apples were homogenised in peptone water (1%) in a Stomacher homogeniser. Serial dilutions of the homogenate were made and 0.1ml of both homogenate and serial dilutions were seeded on agar plates (PCA, DRBC, MRS and VRMC). In addition, direct seeding of the infection present on the apple was also performed. The plates were incubated under the conditions established for each of the agars used.

After the required incubation time in each case, growth was observed on PCA and DRBC plates and not on MRS and VRMC plates, therefore, growth of mesophilic aerobes and moulds and yeasts, but not of lactic acid bacteria or enterobacteria was obtained in any of the samples studied.

The growths obtained showed several morphologically different colonies of mesophilic aerobes, moulds and yeasts. In all the apple samples analysed, in some of the dilutions, sufficiently separated colonies were found to carry out the isolation in an adequate manner.

**Figure 2** shows colonies on PCA and DRBC agar plates obtained from serial dilutions of the different apple samples.

A first visual examination was performed and transplantation of morphologically different colonies was carried out. Mesophilic aerobes were transplanted back onto PCA plates and moulds and yeasts onto DRBC plates.

In the case of mesophilic aerobes, once pure cultures were obtained, they were transplanted onto mould and yeast selective medium (DRBC) in order to classify them as bacteria or moulds and yeasts.

After finishing the process to obtain pure cultures, a new visual and microscopic examination of the morphology was performed and together with the growth results obtained in specific and selective media, a total of 15 isolated colonies were considered susceptible to be different: 3 bacteria and 12 moulds and yeasts. Samples of all cultures were preserved at -80C. For the identification of these colonies, the application of molecular techniques was considered necessary.

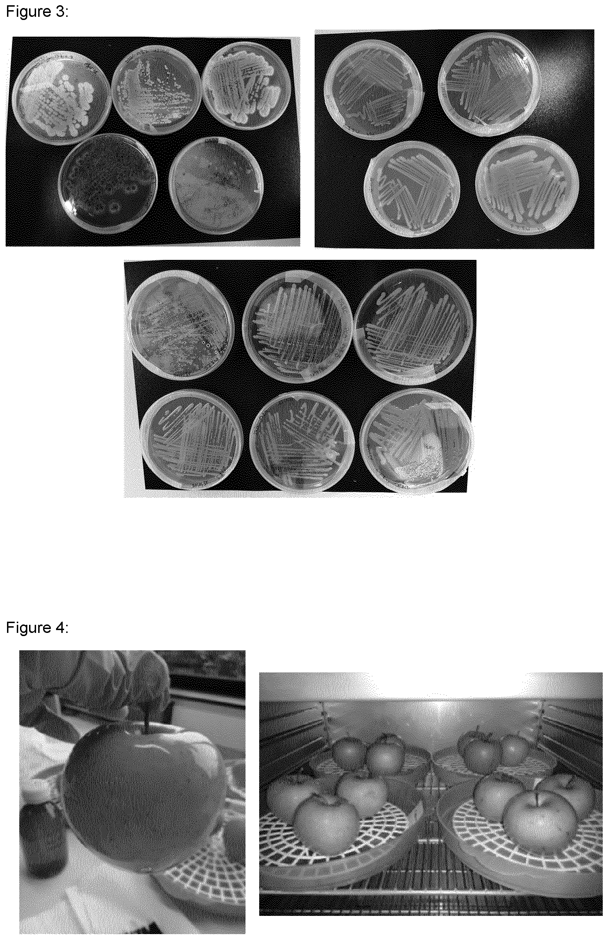

**Figure 3** shows pure cultures isolated from the apple samples.

Of the 15 cultures that were isolated, 10 were selected due to their presence in the majority of samples analysed.

Firstly, DNA was isolated from each culture and then the region of interest (a fragment of about 1100 bp of the 16S rDNA gene) was amplified. The amplicon was then purified and sequenced in both directions. Once the sequences were obtained, the contig of both sequences was performed.

For the identification of the bacteria, the sequences were entered into databases such as GenBank NCBI (National Center for Biotechnology Information, http://www.ncbi.nlm.nih.gov) with the BLAST programme (http://www.ncbi.nlm.nih.gov/BLAST), obtaining the following results:

**Table 1**

| **DESCRIPTION** | **MICROORGANISM** |
|---|---|
| Lelliottia amnigena | Bacteria |
| Pseudomonas lutea | Bacteria |
| Curtobacterium flaccumfaciens | Bacteria |
| Peterozyma toletana | Yeast |
| Bullera alba | Yeast |
| Debaryomyces hansenii | Yeast |
| Candida oregonensis | Yeast |
| Penicillium rugulosum | Mould |
| Neocucurbitaria unguis-hominis | Mould |
| Penicillium expansum | Mould |

### EXAMPLE 5: Selection of the optional component plasticiser

Substances with plasticising properties as an optional component of the water-based composition of the invention were explored, in order to provide the coating with improved mechanical behaviour in terms of flexibility and resistance to breakage, reducing its brittleness. The plasticiser selected to be added to the polysaccharides is glycerol, due to its high stability and compatibility with the hydrophilic biopolymer chains.

### EXAMPLE 6: Viscosity of water-based compositions containing different polysaccharides

In order to select the polysaccharide with the best properties for preparing a water-based composition for coating fruits and vegetables, which have an edible casing, the viscosity of the sample compositions prepared according to Example 1 and Example 2, containing plasticizer or not, was measured using the ULA low viscosity adaptor on the Brookfield Viscometer.

The obtained results are shown in **Table 2** below; as may be observed, it was necessary to adapt the rotational speed of the ULA adapter to obtain a correct viscosity measurement for each of the coatings. Although in general terms the viscosities of all the coatings tested are considered to be low, it can be observed that among the polysaccharide coatings, LM pectin and HM pectin have a considerably lower viscosity than alginate and methylcellulose, thus the latter were selected as preferred, from the viscosity point of view, for providing a coating for fruits and vegetables.

**Table 2**

| **Compositions** | **Speed (rpm)** | **T(°C)** | **Viscosity (cP)** | **Torque (%)** |
|---|---|---|---|---|
| LM Pectin (2%) | 12 | 20.3 | 24,2 | 48,45 |
| LM Pectin (2%)/Glycerol (25%) | 12 | 19.5 | 24,45 | 48,9 |
| HM Pectin (2%) | 12 | 20.2 | 35,55 | 70,9 |
| HM Pectin (2%)/Glycerol (25%) | 12 | 20.2 | 36,35 | 72,6 |
| Alginate (1.5%) | 1.5 | 19.5 | 272,9 | 68,8 |
| Alginate /Glycerol (25%) | 1.5 | 20.3 | 272,1 | 69,7 |
| Methylcellulose (1%) | 1.5 | 19.6 | 272,1 | 68,8 |
| Methylcellulose (1 %)/Glycerol (25%) | 1.5 | 19.8 | 308,9 | 77,05 |

### EXAMPLE 7: Water vapour permeability and mechanical properties of water-based compositions containing different polysaccharides

Films were prepared from the solutions containing the different polysaccharides as prepared according to Example 1 and Example 2, containing or not glycerol, in order to subsequently determine their characteristics in terms of resistance and preservation of the fruit: mechanical properties, and water vapour permeability (PVA).

The films were obtained by casting, i.e. the coating forming formulations were poured into 15 cm diameter Petri dishes and dried under standard temperature and humidity conditions.
The compositions of the coating-forming solutions poured onto the plate were as follows:
- LM Pectin (2%)
- LM Pectin (2%)/Glycerol (25%)
- HM Pectin (2%)
- HM Pectin (2%)/Glycerol (25%)
- Alginate (1.5%)
- Alginate (1.5%)/Glycerol (25%)
- Methylcellulose (1%)
- Methylcellulose (1%)/Glycerol (25%)

Subsequently, the water vapour permeability of each film was measured using the PERMATRAN-W^{®} Model 3/33; the analysis of the mechanical properties of the films made from the coating solutions was carried out with a texturometer (model TA.XT.Plus, Stable Micro Systems, UK).

The obtained results are shown in **Table 3** below:

**Table 3**

| **Sample** | | **Mechanical Properties** | | **PVA (g.mm/m² .h.Kpa)** |
|---|---|---|---|---|
| | | **T (N/mm )²** | **E (%)** | |
| **HM Pectin (2%)** | Glycerol-free | 36.003±7.603 | 20.123±2.550 | - |
| | 25% Glycerol | 19.033±3.847 | 33.419±4.111 | 0.419±0.038 |
| **LM Pectin (2%)** | Glycerol-free | 34.720±6.689 | 13.708±3.736 | 0.013±0.003 |
| | 25% Glycerol | 11.356±2.161 | 36.614±5.604 | 0.380±0.008 |
| **Alginate (1.5%)** | Glycerol-free | 87.685±9.165 | 4.329±0.616 | - |
| | 25% Glycerol | 36.439±3.683 | 5.440±0.596 | - |
| **Methylcellulose (1%)** | Glycerol-free | 86.321±8.906 | 13.518±1.941 | - |
| | 25% Glycerol | 54.229±9.658 | 48.925±3.650 | - |

### EXAMPLE 8: Study of the functional effect of the active ingredients

The antimicrobial capacity of the natural extracts listed in Table 4 below, was tested and compared against six of the microorganisms isolated and identified in Example 4. These micro-organisms were isolated directly from the infection areas on the tested apples or considered as potential post-harvest pathogens.

**Table 4**

| |
|---|
| Thyme Extract |
| Melissa Extract |
| Grape Extract |
| Orange extract |
| Oregano essential oil |
| Garlic essential oil |

It should be noted that the mould causing most of the diseases of apples in post-harvest is *Penicillium expansum.* This microorganism was isolated and identified from the infected areas analysed. The bacterium *Curtobacterium flaccumfaciens* was also isolated from the infected area of apples.

The evaluation of the antimicrobial capacity of the selected natural compounds has been carried out by means of the following tests:
· Zone of inhibition analysis: an agar diffusion method where a volume of antimicrobial compound diffuses from the disc/perforation into the agar and the zone of inhibition obtained on microbiological growth is assessed.
· Determination of the minimum inhibitory concentration (MIC). The effect of different dilutions of the additives against the micro-organisms of interest in culture broth is analysed. The lowest concentration that inhibits the visible development of the micro-organism is known as the MIC.

### Zone of inhibition:

For this assay, bacterial suspensions (10⁷ cfu/ml) were seeded on Mueller Hilton agar plates. For moulds and yeasts, suspensions of similar concentration were prepared and seeded on Sabouraud Dextrose agar plates. The solutions of extracts and essential oils to be evaluated were added to the agar either in perforations, previously made in the agar, or in discs.

For their evaluation, concentrations of 500mg/ml of thyme extract, melissa extract and grape extract were prepared. In the case of orange extract, oregano essential oil and garlic essential oil, being liquids, they were added directly to the borehole. For compounds thyme extract, melissa extract, grape extract and orange extract, the effect was evaluated for 100 µλ, and for oregano essential oil and garlic essential oil for 10 µλ.

Once the plates were prepared, the bacteria were incubated for 24h at 30°C and the moulds and yeasts for 72h at 25°C.

The following **Table 5** shows the values of inhibition halos obtained, thus observing the effect produced by the amount of compound analysed in each case:

**Table 5**

| **Inhibition halo diameter (not including disc/drilling) (mm)** | | | | | | |
|---|---|---|---|---|---|---|
| | *Pseudomonas lutea* | *Curtobacterium flaccumfaciens* | *Debaryomyces hansenii* | *Penicillium rugulosum* | *Neocucurbitaria unguis-hominis* | *Penicillium expansum* |
| **Thyme Extract** | 9 | 10 | 6 | 11 | 20 | 5 |
| **Melissa Extract** | 10 | 5 | 0 | 0 | 0 | 0 |
| **Grape Extract** | 9 | 20 | 0 | 0 | 11 | 0 |
| **Orange extract** | 6 | 1,5 | 0 | 0 | 0 | 0 |
| **Oregano essential oil** | 8 | 40 | >40 | 40 | 40 | >40 |
| **Garlic essential oil** | 0 | 22 | >40 | >40 | >40 | >40 |

### Minimum inhibitory concentration (MIC)

For the assays, 1000mg/ml solutions of the extracts were prepared and serial dilutions were performed in a multiwell plate (48 wells/plate), evaluating final concentrations between 500 and 3.90mg/ml. The inoculum used was 10⁶ cfu/ml for bacteria and 10⁵ cfu/ml for yeasts and moulds. Mueller-Hilton broth was used for bacteria and Potato dextrose broth for yeasts and moulds.

In the case of essential oils, the following amounts were evaluated: 40, 20, 10 and 5 µL/ml in Mueller-Hilton broth or Potato dextrose, depending on the micro-organism.

The plates were incubated at 30°C (bacteria) and 25°C (moulds and yeasts) for 24h and 72h respectively. The lowest concentration, required in each case for the inhibition of visible growth of the different microorganisms, was considered as the MIC. The results are shown in **Table 6** below:

**Table 6**

| **MIC estimation (mg/ml or µl/ml) in liquid medium** | | | | | | |
|---|---|---|---|---|---|---|
| | *Pseudomonas lutea* | *Curtobacterium flaccumfaciens* | *Debaryomyces hansenii* | *Penicillium rugulosum* | *Neocucurbitaria unguis-hominis* | *Penicillium expansum* |
| **Thyme extract (mg/ml)** | >500 | 125 | 31,25 | 62,5 | 15,6 | >500 |
| **Melissa extract** | 250 | 250 | 62,5 | 500 | 62,5 | 62,5 |
| **Grape extract** | - | - | - | - | - | - |
| **Orange extract (µl/ml)** | 125 | 250 | 500 | <16,87 | <16,87 | 33,75 |
| **Oregano essential oil** | <5 | <5 | <5 | >40 | >40 | <5 |
| **Garlic essential oil** | >40 | <5 | <5 | <5 | <5 | <5 |

After the incubation time, the effect of the natural extracts studied on the growth of bacteria, yeasts and moulds was observed and growth inhibition was determined. Growth was analysed by visual analysis of the turbidity in each study condition. It should be noted that the extracts, mainly the high concentrations, give a certain turbidity to the medium which, on occasions, prevented a good visualisation of the turbidity caused by microbial growth. For this reason, it was chosen to indicate the concentrations shown in the table as estimates of MIC. Although they are not exact, they provide an idea of the inhibition effect produced on growth by the compounds studied. In the case of the grape extract, for none of the concentrations studied it was possible to establish and estimate the MIC due to the high turbidity of the extract at the concentrations studied.

As observed in the inhibition halo tests, the orange extract, the oregano essential oil and the garlic essential oil inhibited the growth of all the micro-organisms studied, the most effective concentration depending on the type of compound. In the case of the effect of the orange extract against *Penicillium expansum,* where the inhibition halo was not high, in liquid medium it was observed that it inhibited growth at a low concentration. It is suspected that the diffusion of this extract in the agar medium was not adequate to adequately assess the effect.

The orange extract and garlic essential oil were selected as the most suitable active ingredients.

### EXAMPLE 9: Apple application study

The compositions according to the invention and the comparative examples were applied to apples, by briefly immersing the apples into one of the compositions to apply a coating, and subsequently allowing to dry in a climatic chamber, under 40 % humidity and at 25°C. **Figure 4** shows an apple immediately after immersion, and apples while drying in a climatic chamber.

None of the coatings provided a negative appearance or worse characteristics to the apples, compared to the uncoated reference apples, used as control apples. The appearance of all of them was slightly brighter than the control apples. Although the natural extracts provide their characteristic smell to the apples shortly after application and drying, this odour rapidly disappears and becomes practically imperceptible.

### EXAMPLE 10: Texture profile analysis 24 hours after coating

The apples coated with the different polysaccharide compositions were subjected to a texture profile analysis performed with a texture analyser (model TA.XT.Plus, Stable Micro Systems, UK). See **Figure 5****.**

As a parameter providing information on the condition of the apples, the bruising potential is measured by means of continuous static compression. For this purpose, a 75 mm probe, P / 75, is attached to the analyser. The parameters for the determinations are as follows: pre-test speed = 1.00 mm / s, test speed = 0.02 mm / s, post-test speed = 10.00 mm / s, distance = 16 mm, triggering force = Auto 25g.

Once the trigger force of 25 g is reached, the compression plate advances towards the apple and a rapid increase in force is observed. During this time, the sample deforms under the applied force, but there is no apparent breakage of the product. As the compression distance increases, small peaks are observed in the profile of the graph, each peak indicating a compositional failure of the sample contributing to the formation of a bruise. This stage ends abruptly when the sample breaks or cracks and is indicated by a large decrease in strength. The greater the distance over which this occurs, the greater the ability of the sample to resist compression without rupture.

It is generally desired that, while ripe, the fruit still maintains a high degree of mechanical strength to protect it from damage, such as bruising, during transport and handling, as the level of damage sustained by the crop during harvesting and handling can considerably affect its shelf life.

The test was carried out on one of each samples coated with each type of coating tested. The results obtained are shown in **Table 7** below:

**Table 7**

| **Apples coated with:** | **Compressive force (N)** |
|---|---|
| LM Pectin (2%) | 172,368 |
| LM Pectin (2%)/Glycerol (25%) | - |
| HM Pectin (2%) | 205,409 |
| HM Pectin (2%)/Glycerol (25%) | 207,614 |
| Alginate (1.5%) | 209,163 |
| Alginate (1.5%)/Glycerol (25%) | 185,114 |
| Methylcellulose (1%) | 235,358 |
| Methylcellulose (1%)/Glycerol (25%) | 225,845 |
| Control Apples | 191,952 |

From the results it can be deduced that the apples with the highest resistance to compression, after the four weeks of testing, are the apples coated with methylcellulose, both with and without glycerol, increasing the resistance of the fruit up to 20% with respect to the uncoated control apples. In the case of HM pectin and alginate coatings, the firmness of the apples, four weeks after the start of the trial, was a mere 10% higher than the uncoated control apples.

### EXAMPLE 11: Weight loss

The following compositions, comprising the selected polysaccharides alginate and methylcellulose, both alone and in combination with glycerol and/or active ingredient orange extract, as prepared according to Example 3, were prepared:
- Alginate (2%) / Orange Extract 100ppm
- Alginate (2%) / Glycerol (25%) / Orange Extract 100ppm
- Methylcellulose (1%)
- Methylcellulose (1%) / Orange Extract 100ppm

Apples were coated with each of the prepared compositions, as outlined in Example 9. Again, none of the coatings provided the apples with a negative appearance or worse characteristics to the apples, in comparison with the uncoated control apples.

The evolution of the weight of the apples, both the coated apples and the uncoated control apples, was measured, as this data will provide information on the degree of maturity of the apples, and therefore on the conservation capacity of the coatings applied. The weight of each apple, in each group (i.e., each composition) was determined 24 hours after application of the coating, and a week thereafter.

The weight loss in gram was calculated for each of the compositions, and was represented in Figure 6.

As may be observed, while the uncoated control apples lost around 11 g, the apples coated with methylcellulose showed the best performance, both with and without orange extract, and lost less than 8 g, which is a loss about 27 % lower than the average loss in control apples. These results suggest that with the methylcellulose coating, the loss of moisture is slowed down.

### EXAMPLE 12: Texture profile analysis

The texture profile analysis as described in Example 10 was repeated for apples coated with the same compositions as in Example 11, and measurements 24 hours, 1 week, 2 weeks and 3 weeks after coatings were taken.

Once again, the texture profile analysis is performed with a texture analyser (model *TA.XT.Plus, Stable Micro Systems,* UK).

As a parameter providing information on the condition of the apples, the bruising potential is measured by means of continuous static compression. For this purpose, a 75 mm probe, P / 75, is attached to the analyser. The parameters for the determinations are as follows: *pre-test speed =* 1.00 mm / s, *test speed =* 0.02 mm / s, *post-test speed =* 10.00 mm / s, *distance =* 16 mm, *triggering force* = Auto 25g.

Once the trigger force of 25 g is reached, the compression plate advances towards the apple and a rapid increase in force is observed. During this time, the sample deforms under the applied force, but there is no apparent breakage of the product. As the compression distance increases, small peaks are observed in the profile of the graph, each peak indicating a compositional failure of the sample contributing to the formation of a bruise.

This stage ends abruptly when the sample breaks or cracks and is indicated by a large decrease in strength. The greater the distance over which this occurs, the greater the ability of the sample to resist compression without rupture.

As noted above, tt is generally desired that, while ripe, the fruit still maintain a high degree of mechanical strength to protect it from damage, such as bruising, during transport and handling, as the level of damage sustained by the crop during harvesting and handling can considerably affect its shelf life.

The test is carried out on one of the samples coated with the same coatings as in Example 11, and the results are indicated in **Table 8** below and in Figure 7:

**Table 8**

| | **Methylcellulose (1%)** | **Methylcellulose (1%) and Orange Extract (100ppm)** | **Alginate (2%) and Orange Extract (100ppm)** | **Alginate (2%) and Glycerol (15%) and Natural Extract (100ppm)** | **Control Apples** |
|---|---|---|---|---|---|
| **Compressive Strength (N) at 24 hours** | 347,044 | 350,538 | 294,908 | 344,771 | 293,067 |
| **Compressive Strength (N) at week 1** | 372,368 | 374,22 | 316,766 | 369,163 | 291,141 |
| **Compressive Strength (N) at Week 2** | 376,375 | 305,824 | 303,186 | 328,755 | 264,372 |
| **Compressive Strength (N) at Week 3** | 313,382 | 241,628 | 152,569 | 198,844 | 157,409 |

It may be observed that the firmness of all types of apples remains almost constant during the first two weeks of the trial, but decreases considerably in the third week of the trial.

At that moment, the apples with the highest resistance to compression are the apples coated with methylcellulose, both with and without orange extract. The difference observed in the case of apples coated only with methylcellulose is substantial, both in comparison with apples treated with the alginate based coatings and with the control apples.

### EXAMPLE 13: Shelf-life analysis

The evolution of the deterioration of the apples with the coatings under study was followed, always with reference to the untreated control apples.

This evolution has been portrayed by means of photographs taken of each group of apples in the following four weeks after the application of the coatings.

During the evolution of the deterioration of the apples, the moment when the visual differences between the control apples and the apples treated with coatings are most evident is in the fourth week of the trial.

Figures 8 to 12 are photographs taken after four weeks:
Figure 8 corresponds to uncoated control apples,
Figure 9 corresponds to apples coated with methylcellulose alone,
Figure 10 corresponds to apples coated with methylcellulose containing orange extract,
Figure 11 corresponds to apples coated with alginate containing orange extract,
Figure 12 corresponds to apples coated with alginate and glycerol and orange extract.

Looking closely at the figures 8 to 12, it is worth noting, initially, the clear difference between control apples and apples coated with methylcellulose: while control apples have a rather wrinkled skin (and yellow skin, although not appreciable in the B&W photographies), the skin of the apples treated with methylcellulose remains smoother (and greener in general, although not appreciable in the B&W photographies). Such characteristics provide these apples with a appetising appearance in the eyes of the consumer even after four weeks. These results are very similar for apples coated with methylcellulose and orange extract.

In the case of apples coated with alginate and orange extract, both with and without glycerol, the appearance of the coating is slightly heterogeneous and this fact leads to a worse preservation of the fruit and a rougher appearance of the skin, as may be appreciated in figures 11 and 12.

## Claims

1. A water-based composition for coating fruits and vegetables, which have an edible casing, with an edible coating, comprising the following components:
- 0.5 to 2 wt. % of methylcellulose;
- 0.001 to 1 wt. % of a natural extract with antimicrobial effect;
- optionally a plasticizer, in an amount between 0 and 35 % with respect to the amount of methylcellulose;
- water to balance;
the weight percentages being with respect to the total amount of water-based composition.

2. A water-based composition according to claim 1, wherein the natural extract with antimicrobial effect is selected from the group consisting of plant or fruit extracts and essential oils, and mixtures thereof.

3. A water-based composition according to any one of claims 1 or 2, wherein the plant of fruit extracts and essential oils have antimicrobial effect against one or more of *Lelliottia amnigena, Pseudomonas lutea, Curtobacterium flaccumfaciens, Peterozyma toletana, Bullera alba, Debaryomyces hansenii, Candida oregonensis, Penicillium rugulosum, Neocucurbitaria unguis-hominis* and *Penicillium expansum.*

4. A water-based composition according to any one of claims 1 to 3, wherein the plant or fruit extract is selected from the group consisting of thyme extract, melissa extract, grape extract and orange extract, and mixtures of the foregoing.

5. A water-based composition according to any one of claims 1 to 4, wherein the essential oil is selected from oregano essential oil and garlic essential oil, and mixtures of the foregoing.

6. A water-based composition according to any one of claims 1 to 5, wherein the natural extract is selected from orange extract and garlic essential oil, and mixtures of the foregoing.

7. A water-based composition according to any one of claims 1 to 6, wherein the content of methylcellulose is between 0.75 and 1.25 wt. %.

8. A water-based composition according to any one of claims 1 to 7, wherein the plasticizer is present in the composition.

9. A water-based composition according to any one of claims 1 to 8, wherein the plasticizer is present in an amount between 15 and 30 % with respect to the amount of methylcellulose.

10. A water-based composition according to any one of claims 1 to 9, wherein the plasticizer is glycerol.

11. A method for producing a water-based composition for coating fruits or vegetables having an edible casing, as defined in any one of claims 1 to 10, comprising the steps of:
1. adding methylcellulose to water;
2. heating the obtained mixture to a temperature of between 60 and 100 °C, and stirring the mixture;
3. removing the heating; if necessary, adding additional water; and stirring until a temperature of between 20 and 30 °C is reached;
4. optionally adding plasticizer, and stirring until a homogeneous mixture is obtained;
5. adding the natural extract or extracts to the mixture, and continue stirring until a homogenous mixture is formed, thus obtaining the water-based composition.

12. A method for coating fruits and vegetables having an edible casing, comprising the steps of:
a. washing and drying the fruit or vegetable to be coated to remove any dirt or dust;
b. providing a water-based composition as defined in any one of claims 1 to 10 or obtained according to claim 11;
c. applying the water-based composition by a procedure selected from one of the following:
- immersing the fruit or vegetable in the water-based composition and removing the fruit or vegetable from the water-based composition; or
- placing the fruit or vegetable on a clean surface and spraying the water-based composition the fruit or vegetable, so as to coat the fruit or vegetable with the water-based composition; and
d. allowing the fruit or vegetable to dry, preferably in a climatic chamber, at a controlled temperature of between 20 and 27 °C and a humidity of between 30 and 50 %.

13. A method for coating fruits or vegetables according to claim 12, wherein the fruits or vegetables are selected from apples, pears, grapes, cherries, peaches, nectarines, apricots, berries, tomatoes, peppers, cucumbers, aubergines, carrots, asparagus and zucchini.

14. A method for coating fruits according to claim 12 or 13, wherein the fruit is an apple.
